Europäisches Patentamt

European Patent Office

Office européen des brevets

(11) Publication number: **0 505 996 A2**

# EUROPEAN PATENT APPLICATION

(21) Application number: **92105078.7**

(22) Date of filing: **25.03.92**

(51) Int. Cl.⁵: **C09D 127/00**, C09D 141/00, C09D 143/00

(30) Priority: **27.03.91 JP 87746/91**

(43) Date of publication of application:
**30.09.92 Bulletin 92/40**

(84) Designated Contracting States:
**DE FR GB**

(71) Applicant: **NIPPON ZEON CO., LTD.**
**6-1, 2-chome, Marunouchi, Chiyoda-ku**
**Tokyo(JP)**

(72) Inventor: **Nakamura, Eitaro**
**3-5, Nishikanda 2-chome**
**Chiyoda-ku, Tokyo(JP)**
Inventor: **Nakamura, Katsuya**
**41-11, Nishirokugo 2-chome**
**Ohta-ku, Tokyo(JP)**

(74) Representative: **Türk, Dietmar, Dr. rer. nat. et al**
**Türk, Gille, Hrabal, Leifert Patentanwälte**
**Brucknerstrasse 20**
**W-4000 Düsseldorf 13(DE)**

(54) **A moisture crosslinking coating material.**

(57) A moisture crosslinking coating material soluble in solvents comprises as a vehicle a resin having an epoxy group and at least one kind of hydrophilic group selected from the group consisting of $SO_3M$, $SO_4M$, $PO_3M_2$ and $PO_4M_2$ where M is an alkali metal ion or ammonium ion.

The coating material has good dispersion of pigments, is excellent in forming thick layer coating, gives a coating layer excellent in weatherability, resistance against chemicals and resistance against solvents by crosslinking with moisture at room temperature.

EP 0 505 996 A2

BACKGROUND OF THE INVENTION

1. Field of the invention

The present invention relates to a novel moisture crosslinking coating material. More particularly, the present invention relates to a coating material soluble in solvents which has good dispersion of pigments, is excellent in forming thick layer coating, gives a coating layer excellent in weatherability, resistance against chemicals and resistance against solvents by crosslinking with moisture at room temperature and can be utilized for corrosion prevention and embellishment.

2. Description of the prior art

Polyvinyl chloride coating materials soluble in solvents have been widely utilized as heavy duty corrosion preventing coating for ships and marine structures because of the excellent toughness, resistance to chemicals and weatherability as well as good drying property. However, the coating materials of this kind have problems that resistance against solvents is inferior and that thickness of the coating formed by one operation of coating is small. One of the reasons that the thickness of the coating formed by one operation of coating is small is that concentration of vehicle in the coating material can not be readily increased because of high viscosity of the solution of the coating materials in solvents.

For the purpose of increasing the concentration of vehicle in the coating materials without causing increase of viscosity of the coating materials, various methods, such as (1) decreasing molecular weight of the resin, (2) increasing content of soluble components (for example, content of units of polyvinyl acetate) in the resin and (3) increasing content of liquid plasticizer compatible with the resin, have been known. However, all of these methods deteriorate toughness of the coating layer which is the very point of advantage of the polyvinyl chloride coating. Furthermore, weatherability and resistance against chemicals are also deteriorated by the methods (2) and (3).

For the purpose of improving resistance against solvents, it may be possible that a coating layer having good resistance against solvents is prepared by introduction of a reactive group, such as hydroxyl group and epoxy group, into the polyvinyl chloride resin, mixing of a crosslinking agent which can react with the reactive group in the resin, such as a polyisocyanate compound and a polyamine, immediately before the operation of coating and then forming the coating layer. However, the reaction of crosslinking starts immediately after the mixing of the crosslinking agent into the coating material and the time available for the operation of coating (pot life) is inevitably limited.

Coating materials which can be applied as the one component material without mixing crosslinking agent and crosslinked in the condition of the environment of utilization are proposed. Examples of such coating materials are polyvinyl chloride resin in which isocyanate groups are introduced and polyvinyl chloride resin in which alkoxysilane groups are introduced. The polyvinyl chloride resin in which isocyanate groups are introduced has problems that the coating layer is discolored because of formation of amines by the reaction with water in the environment and that viscosity of the coating material is increased by the reaction of the material with the surface of pigments. The polyvinyl chloride resin in which alkoxysilane groups are introduced has a problem that viscosity of the coating material is increased by the reaction of the material with the surface of pigments because the resin has high reactivity with water.

Coating materials of acrylic resins soluble in solvents have good weatherability and coating materials of styrene resins soluble in solvents can be utilized as a solution in non-polar solvents. However, these coating materials have the same problem as the coating materials of polyvinyl chloride that thickness of the coating formed by one operation of coating is small. Adjustment of the molecular weight of the vehicle and introduction of crosslinking groups for solving the problem lead to the same problems as described above for the coating materials of polyvinyl chloride.

Dispersion of pigments in coating materials is an important factor for workability during the operation of coating and for durability of the coating formed. Naturally, good and stable dispersion is required. For the purpose of attaining better dispersion of pigments, addition of low molecular weight surface active agents and coupling agents to the coating materials have been tried. However, addition of these agents leads to floating and sagging and resistance of the coating layer against water is deteriorated.

SUMMARY OF THE INVENTION

The present invention accordingly has an object to provide a coating material soluble in solvents which has good dispersion of pigments, is excellent in forming a thick layer coating, gives a coating layer excellent in weatherability, resistance against chemicals and resistance against solvents by crosslinking with moisture at the room temperature.

The present invention has been completed as a result of the extensive investigations undertaken with an object described above, leading to a discovery that the object can be attained by a coating material comprising as a vehicle a resin having a specific hydrophilic group and epoxy group.

Thus, the moisture crosslinking coating material soluble in solvents of the present invention comprises as a vehicle a resin having an epoxy group and at least one kind of hydrophilic group selected from the group consisting of $SO_3M$, $SO_4M$, $PO_3M_2$ and $PO_4M_2$ where M is an alkali metal ion or ammonium ion.

Other and further objects, features and advantages of the invention will appear more fully from the following description.

## DETAILED DESCRIPTION OF THE INVENTION

The resin comprised in the coating material of the invention as the vehicle is a resin having an epoxy group and at least one kind of hydrophilic group selected from the group consisting of $SO_3M$, $SO_4M$, $PO_3M_2$ and $PO_4M_2$ where M is an ion specified above.

Preferable examples of the hydrophilic group are $SO_3M$, $SO_4M$ and $PO_4M_2$ and preferable examples of the resin are polyvinyl chloride copolymers, (meth)acrylate copolymers and styrene copolymers.

The resin can be prepared, for example, by the following methods: (1) copolymerization of vinyl chloride, a (meth)acrylate or styrene with a radical polymerizable monomer having the hydrophilic group described above, a monomer having epoxy group and other copolymerizable monomers which are utilized according to necessity; (2) copolymerization of vinyl chloride, a (meth)acrylate or styrene with a monomer having epoxy group and other copolymerizable monomers which are utilized according to necessity in the presence of an radical initiator having the hydrophilic group described above; and (3) partial reaction of a compound having the hydrophilic group described above with a copolymer of vinyl chloride, a (meth)-acrylate or styrene, a monomer having epoxy group and other copolymerizable monomers which are utilized according to necessity. The resin can also be prepared by combinations of these methods.

Examples of the monomer having epoxy group utilized in the methods (1), (2) and (3) are: glycidyl ethers of unsaturated alcohols, such as allyl glycidyl ether, metallyl glycidyl ether and the like; glycidyl esters of unsaturated acids, such as glycidyl acrylate, glycidyl methacrylate, glycidyl p-vinylbenzoate, methyl glycidyl itaconate, glycidyl ethylmaleate, glycidyl vinylsulfonate, glycidyl (met)allylsulfonate and the like; epoxides of olefins, such as butadiene monooxide, vinylcyclohexene monooxide, 2-methyl-5,6-epoxyhexene and the like and the other like compounds. Preferable examples among these compounds are allyl glycidyl ether, glycidyl methacrylate and vinylcyclohexene mooxide.

Examples of the radical polymerizable monomer having the hydrophilic group utilized in the method (1) are: radical polymerizable monomers having $SO_3M$ group, such as alkali metal salts and ammonium salts of vinylsulfonic acid, methylvinylsulfonic acid, (met)allylsulfonic acid, styrenesulfonic acid, 2-(sulfonic acid)ethyl (meth)acrylate, 2-acrylamido-2-methylpropanesulfonic acid, 3-allyloxy-2-hydroxypropanesulfonic acid and the like; radical polymerizable monomers having $SO_4M$ group, such as alkali metal salts and ammonium salts of 2-(sulfuric acid)ethyl (meth)acrylate, 3-allyloxy-2-hydroxypropanesulfuric acid and the like; radical polymerizable monomers having $PO_4M_2$ group, such as alkali metal salts and ammonium salts of 3-chloro-2-(phosphoric acid)propyl (meth)acrylate, 2-(phosphoric acid)ethyl (meth)acrylate, 3-allyloxy-2-hydroxylpropane-phosphoric acid and the like; radical polymerizable monomers having $PO_3M_2$ group, such as alkali metal salts and ammonium salts of vinylphosphofonic acid, acrylamidomethanephosphonic acid, 2-(phosphonic acid)ethyl (meth)acrylate, 3-allyloxy-2-hydroxypropane-phosphonic acid and the like.

Examples of the radical initiators having the hydrophilic group utilized in the method (2) are: radical initiators having $SO_4M$ group, such as sodium persulfate, potassium persulfate, ammonium persulfate and the like; radical initiators having $PO_4M_2$, such as potassium perphosphate, sodium perphosphate and the like; and the like compounds.

Examples of the compound having hydrophilic group utilized for introducing the hydrophilic group into the copolymer in the method (3) are: compounds having $SO_3M$ group, such as sodium sulfite, ammonium sulfite, sodium hydrogensulfite, potassium hydrogesulfite, ammonium thiosulfate, sodium salt of taurine, sodium sulfanilate, sodium sulfaminate and the like; compounds having $SO_4M$ group, such as sodium hydrogensulfate, ammonium hydrogensulfate, sodium 2-aminoethylsulfate and the like; compounds having $PO_3M_2$ group, such as sodium hydrogenphosphite, ammonium hydrogenphosphite and the like; compounds having $PO_4M_2$ group, such as dipotassium hydrogenphosphate, disodium hydrogenphosphate and the like; and the like other compounds.

Examples of the other copolymerizable monomers which are utilized according to necessity in the methods (1), (2) and (3) are: vinyl esters of carboxylic acids, such as vinyl acetate, vinyl propionate and the like; vinyl ethers, such as methyl vinyl ether, isobutyl vinyl ether, cetyl vinyl ether and the like; allyl compounds, such as allyl chloride, allyl alcohol, allyl ethyl ether, allyl 2-hydroxyethyl ether and the like; vinylidene compounds, such as vinylidene chloride, vinylidene fluoride and the like; esters of unsaturated carboxylic acids, such as monomethyl maleate, diethyl maleate, monobutyl maleate, butyl benzyl maleate, di-2-hydroxyethyl maleate, dimethyl itaconate, methyl (meth)acrylate, ethyl (meth)acrylate, lauryl (meth)-acrylate, 2-hydroxypropyl (meth)acrylate, 2-N,N-dimethylaminoethyl (meth)acrylate and the like; unsaturated carboxylic acids and anhydrides, such as maleic anhydride, itaconic anhydride, maleic acid, fumaric acid, (meth)acrylic acid and the like; amides of unsaturated carboxylic acids, such as N-phenyl maleimide, acrylamide, N-methylolacrylamide and the like; olefins, such as ethylene, propylene and the like; unsaturated nitriles, such as (meth)acrylonitrile and the like; aromatic vinyl compounds, such as styrene, α-methylstyrene, p-methylstyrene and the like; and like other compounds. The other copolymerizable monomers which are utilized according to necessity exemplified herein are suitably selected and utilized according to the purpose of adjusting compatibility and softening point when the resin of the invention is mixed with other resins, according to the purpose of increasing solubility of the resin and also according to the necessity of improvement of properties of the coating layer and improvement of the process of coating and other necessities. The amount of the other copolymerizable monomer contained in the resin is suitably selected according to the purpose and generally in the range from 0 to 50 weight %, preferably in the range from 0 to 30 weight %.

The copolymerization of vinyl chloride, (meth)acrylate or styrene, the monomer having epoxy group and the other copolymerizable monomer which is utilized according to necessity and the copolymerization of vinyl chloride, (meth)acrylate or styrene, the monomer having epoxy group, the radical polymerizable monomer having the hydrophilic group and the other copolymerizable monomer which is utilized according to necessity are conducted according to generally known methods.

Partial reaction of the compound having the hydrophilic group and the copolymer of vinyl chloride, a (meth)acrylate or styrene with the monomer having epoxy group and the other copolymerizable monomers which are utilized according to necessity can also be conducted according to generally known methods, in which processes are selected and utilized according to requirements of the preparation, such as properties, conditions and shape of the materials utilized and ease of separation of the reaction products.

The resin thus prepared generally comprises electrolytic substances not bound to the resin itself which are formed from monomers, emulsifiers, initiators, modifiers and like other ingredients during the process of preparation. When the resin is utilized for a coating material, the electrolytic substances tend to decrease durability of the coating layer or resistance against corrosion. To avoid excess content of the electrolytic substances in the resin, it is preferable that electric conductivity of the aqueous layer of a solution prepared by adding 700 weight parts of deionized water to 300 weight parts of a solution of the resin in tetrahydrofuran containing 33 weight % of the resin is 0.5 m$\Omega^{-1}$ or less. It is more preferable that the electric conductivity is 0.2 m$\Omega^{-1}$ or less.

The content of epoxy group in the resin having epoxy group and the hydrophilic group is preferably 0.5 weight % or more, more preferably in the range from 1 to 12 weight %, most preferably in the range from 2 to 8. When the content is less than 0.5 weight %, the coating material has insufficient ability to crosslink by moisture.

The content of the hydrophilic group in the resin having epoxy group and the hydrophilic group is preferably in the range from 0.1 to 4.0 weight %, more preferably in the range from 0.3 to 2. The value of weight % is calculated as the weight of $-SO_3$, $-SO_4$, $=PO_3$ or $=PO_4$. When the content is less than 0.1 weight %, dispersity of pigments is inferior and the crosslinking ability by moisture is insufficient. When the content is more than 4.0 weight %, resistance of the coating layer against water tends to be decreased.

The average degree of polymerization of the copolymer is generally in the range from 50 to 900, preferably in the range from 200 to 600. When the average degree of polymerization is less than 50, strength of the coating layer after the crosslinking by moisture may be insufficient. When the average degree of polymerization is more than 900, viscosity of the coating material becomes high and the property to form a thick coating layer tends to become inferior.

In the coating material of the invention, a single kind or a combination of two or more kinds of the resin having epoxy group and the hydrophilic group may be utilized. Other resins may be utilized in combination with the resin having epoxy group and hydrophilic group according to desire. Examples of the other resins utilized in combination with the resin having epoxy group and the hydrophilic group according to desire are: synthetic macromolecular compounds, such as polyvinyl chloride resins, polyvinylidene chloride resins, vinyl acetate resins, butyral resins, vinyl ether resins, acrylic resins, styrene resins, polyolefin resins, polyamide resins, polyether resins, polycarbonate resins, coumarone indene resins, petroleum resins, phenol resins, urea resins, melamine resins, unsaturated polyester resins, epoxy resins, silicone resins, polyurethane resins, polyester resins, furan resins, xylene resins, toluene resins and the like; cellulose derivatives, such as nitrocellulose, acetyl cellulose and the like; rubber derivatives, such as chlorinated rubbers, cyclized rubbers and the like; drying oils and the derivatives; natural resins, such as rosins, bitumens and the like; and other resins generally utilized in coating materials. For more detail, Toryo Binran, 4th edition, pages 113 through 316, edited by the editing committee of Toryo Binran, published by Nikkan Kogyo Shimbun, Tokyo, Japan, in 1971, can be referred.

Pigments are comprised in the coating material of the invention in many cases. Kind of the pigments utilized is not particularly limited but any kind of pigments generally utilized in coating materials can be selected and utilized.

Among the coating materials of the invention, coating materials utilizing polyvinyl chloride resins or (meth)acrylate resins as the vehicle are particularly useful for undercoating and overcoating of the coating for corrosion prevention. In these materials, pigments effective for rust prevention are utilized. As the pigments effective for rust prevention, pigments listed in "Coating Materials and Coatings for Corrosion Prevention", the first edition, pages 16 through 22, written by Technical Division of Dainippon Toryo Co., Ltd., published by Nippon Toryo Shimbunsha, Tokyo, Japan, in 1987, can be utilized. Mica-like iron oxides can also be utilized for intermediate coating.

Examples of the solvents utilized in the invention are: hydrocarbons, such as benzene, toluene, xylene, naphtha, paraffin. naphthene and the like; ketones, such as acetone, methyl ethyl ketone, methyl isobutyl ketone, cyclohexanone and the like; ethers, such as tetrahydrofuran, methylcellosolve, ethylcellosolve, butylcellosolve and the like; and the like other solvents. The solvents are selected and utilized according to the kind of the resin. The solvent may be utilized singly or as a combination of two or more kinds. For more detail on the kind and usage of the solvents in general, pages 356 through 386 of Toryo Binran cited above can be referred.

In the coating material of the invention, ultraviolet absorbing agents, antioxidants, mould protecting agents, antifouling agents, viscosity adjusting agents and other additives may be compounded along with the resins, the pigments and the solvents. For more detail of the additives, pages 387 through 433 of Toryo Binran cited above can be referred.

The reason that the coating material of the invention shows excellent dispersion is considered to be based on the adsorption of the resin on the surface of pigments and the resultant formation of a stable resin layer on the surface of the pigments because of the strong affinity of the hydrophilic group in the resin to the surface of the pigments. The reason that the coating material of the invention can be crosslinked by moisture is considered to be based on the formation of acids by partial hydrolysis by moisture of $SO_3M$, $SO_4M$, $PO_3M_2$ or $PO_4M_2$ to form $SO_3H + MOH$, $SO_4H + MOH$, $PO_3H_2 + 2MOH$ or $PO_4H_2 + 2MOH$ and subsequent bonding of the acids and the epoxy group in the resin by reaction.

DESCRIPTION OF THE PREFERRED EMBODIMENTS

The invention will be understood more readily with reference to the following examples; however, these examples are intended to illustrate the invention and are not to be construed to limit the scope of the invention.

Example of preparation of material 1

A polyvinyl chloride resin A containing 3 weight % of epoxy group and 0.9 weight % of $-SO_4$ group was prepared from 70 weight parts of vinyl chloride, 5 weight parts of vinyl acetate, 25 weight parts of allyl glycidyl ether and 5 weight parts of potassium persulfate by emulsion polymerization. Degree of polymerization of the prepared resin was 250. Electric conductivity of the aqueous layer of a solution prepared by adding 700 weight parts of deionized water to 300 weight parts of a solution of the resin A in tetrahydrofuran containing 33 weight % of the resin was 0.1 m$\Omega^{-1}$.

Example of preparation of material 2

Into a separable flask equipped with a stirrer, 50 weight parts of methyl methacrylate, 28 weight parts of n-butyl acrylate, 20 weight parts of glycidyl methacrylate, 3 weight parts of disodium salt of 2-(phosphoric acid)ethyl methacrylate, 1 weight part of sodium hydrogencarbonate, 4 weight parts of azo-bis-isobutyronitrile and 200 weight parts of dimethylformamide were charged and the gas in the gaseous part of the flask was replaced with nitrogen under stirring. The mixture solution was polymerized by heating at 80°C for 10 hours. After the polymerization was finished, the solution of the reaction products was put into 3000 weight parts of deionized water containing 1 weight part of dissolved sodium hydrogencarbonate and the polymer was precipitated by stirring vigorously.

The polymer obtained was dried and washing with 3000 weight parts of deionized water and subsequent drying was repeated twice. Thus, 71 weight parts of the acrylate resin B containing 6 weight % of epoxy group and 0.7 weight % of -$PO_4$ group and having average degree of polymerization of 240 and electric conductivity of 0.02 m$\Omega^{-1}$ was prepared.

Example of preparation of material 3

Into a separable flask equipped with a stirrer, 35 weight parts of styrene, 2 weight parts of sodium styrenesulfonate, 28 weight parts of allyl glycidyl ether, 1 weight part of sodium lauryl sulfate, 1 weight part of sodium hydrogencarbonate, 150 weight parts of deionized water and 4 weight parts of sodium persulfate were charged and the gas in the gaseous part of the flask was replaced with nitrogen under stirring. Emulsion polymerization was started by heating to 70°C. When 2 hours had passed after the start of the polymerization, 35 weight parts of styrene were continuously added into the flask at the rate of 5 weight parts per hour and the polymerization was finished by cooling after 10 hours.

The polymer was recovered from the solution of the reaction products by precipitation, washed and dried. Thus, 62 weight parts of the styrene resin C containing 7 weight % of epoxy group and 1.2 weight % of the total of -$SO_3$ and -$SO_4$ groups wherein the content was calculated as $SO_3$, having average degree of polymerization of 460 and electric conductivity of 0.12 m$\Omega^{-1}$ was prepared.

Example of preparation of material 4

By using the same method as in Example of preparation of material 1, the polyvinyl chloride resin D having the same properties as the resin A except that the resin D contained 1.2 weight % of -$SO_4$ group and had electric conductivity of 2 m$\Omega^{-1}$ was prepared.

Examples 1 through 3 and Comparative examples 1 through 3

In 200 weight parts of tetrahydrofuran, 100 weight parts of one of the resins prepared above was dissolved and the solution was applied on a glass plate to form a coating layer having a dried thickness of 50 $\mu$m.

A part of the coating layer thus prepared was dipped into water of 23°C for 3 days and, then, a test piece of 10 mm square was cut out from the coating layer. Another test piece of the same size was cut out from the coating layer kept in a desiccator without dipping into water. The two test pieces were dipped into 50 ml of tetrahydrofuran and, after they were shaken for 1 day, the resistance against solvent was evaluated. The results are shown in the following table:

| | Example | | | Comparative example | | |
|---|---|---|---|---|---|---|
| | 1 | 2 | 3 | 1 | 2 | 3 |
| kind of resin | A | B | C | E | F | G |
| coating layer kept in a desiccator | d | d | d | d | d | d |
| coating layer dipped in tetrahydrofuran | s | s | s | d | d | d |
| Notes: Resin E: Vinylite VERR®, a product of Union Carbide Corporation, a copolymer of vinyl chloride, vinyl acetate and glycidyl methacrylate having the degree of polymerization of 200 and the content of epoxy group of 2.7 weight %.. Resin F: a copolymer of 70 weight parts of methyl methacrylate and 30 weight parts of n-butyl acrylate having degree of polymerization of 400. Resin G: a copolymer of 99 weight parts of styrene and 1 weight part of sodium styrenesulfonate having the degree of polymerization of 200 and the content of -$SO_3$ of 0.4 weight %. d: dissolved in tetrahydrofuran; s: swollen but insoluble in tetrahydrofuran. | | | | | | |

The results of the evaluation show that the coating material of the invention is crosslinked to form insoluble coating layers by moisture.

Examples 4 and 5 and Comparative examples 4 and 5

In a sand mill, 100 weight parts of titanium oxide, 50 weight parts of one of the resins prepared above, 5 weight parts of tricresyl phosphate, 0.2 weight parts of dibutyltin maleate, 0.2 weight parts of 3,5-di-t-butyl-4-hydroxytoluene, 100 weight parts of methyl ethyl ketone, 100 weight parts of toluene and 0.5 weight parts of aerosil (silicon oxide) were mixed to prepare a coating material. The coating material was evaluated on the following items according to the method of Japanese Industrial Standard K-5634 (1985): (1) fineness, (2) workability, (2) storage stability and (4) resistance against salt water.

Weatherability test was made for 1 year by utilizing the same the coated steel plate as the one utilized in the evaluation of the item (4). After the exposure for weathering for 1 year, the coated steel plate was evaluated by the lattice test according to the method of Japanese Industrial Standard K-5400 6.15 (1985). The accelerated aging test was also made on the coated steel plate after the exposure for 1 year by using a sunshine weathermeter for 3000 hours and the change of color was evaluated by visual observation. The results are shown in the following table:

| Example | 4 | 5 | | |
|---|---|---|---|---|
| Comparative example | | | 4 | 5 |
| kind of resin | A | D | H | I |
| fineness | <10 | <10 | 20 | 20 |
| workability | no problem | no problem | * | * |
| storage stability | stable | stable | gloss of coating decreased | solidified, coating not possible |
| resistance against salt water | no change | rust formed | no change | no change |
| weatherability | | | | |
|    lattice test | 8 | evaluation not possible because of rust | 2 | 6 |
|    coloring test | no change | rust formed | yellow | brown |

Notes: Resin H: Vinylite VAGH®, a product of Union Carbide Corporation, a copolymer of vinyl chloride, vinyl acetate and vinyl alcohol having degree of polymerization of 400.

Resin I: a mixture of 45 weight parts of Vinylite VAGH® and 5 weight parts of Coronate HL® ( a product of Nippon Polyurethane Co., Ltd., an adduct of hexa-methylenediisocyanate and polymethylolpropane).

*: Sagging was observed when the material was diluted with thinner because pattern width is narrow and amount discharged is small.

Example 6

In a sand mill, 100 weight parts of titanium oxide, 1 weight part of carbon black, 60 weight parts of one of the resins prepared above, 100 weight parts of toluene, 100 weight parts of methyl isobutyl ketone and 0.5 weight parts of aerosil were mixed for 90 minutes to prepare a coating material. The coating material thus prepared was applied on the surface of a steel plate of 30 cm square treated with epoxy primer in advance by using a doctor blade to form a coating layer having dried thickness of 15 $\mu$m. The coating layer was dried at the room temperature and treated in a drum saturated with water vapor for 120 minutes. Then, the coating layer was evaluated on resistance against heat sealing at 120°C and resistance against solvent (gasoline). The coating layers prepared from the resin B and the resin C remained fast without formation of adhesiveness but the coating layers formed from the resin F and the resin G showed melting and adhesion

8

by heat and, furthermore, were separated from the substrate plate by the effect of gasoline. The coating material formed from the resin F had high viscosity and the coating layer formed from it showed rough surface.

While the invention has been particularly shown and described with reference to preferred embodiments thereof, it will be understood by those skilled in the art that the foregoing and other changes in form and details can be made therein without departing from the spirit and scope of the invention.

To summarize the advantages obtained by the invention, the coating material soluble in solvents which has good dispersion of pigments, is excellent in forming thick layer coating, gives a coating layer excellent in weatherability, resistance against chemicals and resistance against solvents by crosslinking with moisture at room temperature and can be utilized for corrosion prevention and embellishment.

## Claims

1. A moisture crosslinking coating material soluble in solvents which comprises as a vehicle a resin having an epoxy group and at least one kind of hydrophilic group selected from the group consisting of $SO_3M$, $SO_4M$, $PO_3M_2$ and $PO_4M_2$ where M is an alkali metal ion or ammonium ion.

2. A moisture crosslinking coating material soluble in solvents as claimed in Claim 1 wherein the hydrophilic group is selected from the group consisting of $SO_3M$, $SO_4M$ and $PO_4M_2$.

3. A moisture crosslinking coating material soluble in solvents as claimed in Claim 1 wherein the resin is at least one kind of resin selected from the group consisting of polyvinyl chloride copolymers, acrylate copolymers, methacrylate copolymers and styrene copolymers.

4. A moisture crosslinking coating material soluble in solvents as claimed in Claim 1 wherein the content of the hydrophilic group is in the range from 0.1 to 4.0 weight %.

5. A moisture crosslinking coating material soluble in solvents as claimed in Claim 1 wherein the content of the hydrophilic group in the resin is in the range from 0.3 to 2 weight %.

6. A moisture crosslinking coating material soluble in solvents as claimed in Claim 1 wherein the content of the epoxy group is 0.5 weight % or more.

7. A moisture crosslinking coating material soluble in solvents as claimed in Claim 1 wherein the content of the epoxy group is from 1 to 12 weight %.

8. A moisture crosslinking coating material soluble in solvents as claimed in Claim 1 wherein the content of the epoxy group is from 2 to 8 weight %.

9. A moisture crosslinking coating material soluble in solvents as claimed in Claim 1 wherein electric conductivity of the aqueous layer of a solution prepared by adding 700 weight parts of deionized water to 300 weight parts of a solution of the resin in tetrahydrofuran containing 33 weight % of the resin is $0.5 \ m\Omega^{-1}$ or less.

10. A moisture crosslinking coating material soluble in solvents as claimed in Claim 1 wherein electric conductivity of the aqueous layer of a solution prepared by adding 700 weight parts of deionized water to 300 weight parts of a solution of the resin in tetrahydrofuran containing 33 weight % of the resin is $0.2 \ m\Omega^{-1}$ or less.